Europäisches Patentamt

European Patent Office

Office européen des brevets

(11) Veröffentlichungsnummer: **0 257 438**
**A1**

## (12) EUROPÄISCHE PATENTANMELDUNG

(21) Anmeldenummer: 87111638.0

(22) Anmeldetag: 11.08.87

(51) Int. Cl.⁴: **B65G 47/24**

(30) Priorität: 13.08.86 DE 3627498

(43) Veröffentlichungstag der Anmeldung:
02.03.88 Patentblatt 88/09

(84) Benannte Vertragsstaaten:
AT BE CH DE ES FR GB GR IT LI LU NL SE

(71) Anmelder: Barnickel, Thomas C.
Rothwiesenring 6
D-6082 Möhrfelden-Walldorf(DE)

(72) Erfinder: Barnickel, Thomas C.
Rothwiesenring 6
D-6082 Möhrfelden-Walldorf(DE)

(74) Vertreter: Patentanwälte Grünecker,
Kinkeldey, Stockmair & Partner
Maximilianstrasse 58
D-8000 München 22(DE)

(54) **Vorrichtung zum Ausrichten und Anordnen von Packstücken.**

(57) Die Erfindung betrifft eine Vorrichtung (1) zum Ausrichten und Anordnen von Packstücken, insbesondere Zeitungsbündeln, Säcken und Kartonagen in vorbestimmten Musterlagen. Die Vorrichtung (1) umfaßt einen Ablagetisch (2) und eine angetriebene, in Abschnitte (3, 4, 5) unterteilte Rollenbahn. Ein Rollenbahnabschnitt (4) weist ein Drehkreuz auf, während ein weiterer, sich in Förderrichtung (F) daran anschließender Abschnitt (3) als Positioniereinheit ausgebildet ist. Um die Produktionsgeschwindigkeit der Vorrichtung zu erhöhen und deren Handhabbarkeit weiter zu verbessern, ist in Förderrichtung (F) vor dem Drehkreuz ein weiterer, als erste Positioniereinheit ausgebildeter Rollenbahnabschnitt (5) angeordnet. Die Vorrichtung umfaßt eine Steuerung, mittels welcher die einzelnen Rollenbahnabschnitte (3, 4, 5) unabhängig voneinander antreibbar und abbremsbar ausgebildet sind.

FIG. 1

EP 0 257 438 A1

## Vorrichtung zum Ausrichten und Anordnen von Packstücken

Die Erfindung betrifft eine Vorrichtung zum Ausrichten und Anordnen von Packstücken, insbesondere Zeitungsbündeln, Säcken und Kartonagen in vorbestimmten Musterlagen, mit einem Ablagetisch und einer angetriebenen, in Abschnitte unterteilten Rollenbahn, wobei ein Rollenbahnabschnitt als Drehkreuz und ein sich in Förderrichtung daran anschließender Abschnitt als Positioniereinheit ausgebildet sind.

Vorrichtungen der eingangs genannten Art werden dazu verwendet, Packstücke in einer bestimmten Musterlage auf dem Ablagetisch anzuordnen und von dort auf eine Palette aufzuladen.

Bei einer bekannten Vorrichtung werden die Packstücke von Hand auf die Rollenbahn aufgelegt und in Bezug auf die Mittenachse des Drehkreuzes ausgerichtet. Das auf die Rollenbahn aufgelegte Packstück wird an dem Drehkreuz in die gewünschte Richtung gedreht und dann auf der sich anschließenden Positioniereinheit entsprechend dem vorgewählten Muster quer zur Förderrichtung der Rollenbahn verschoben, wodurch die Ablage des jeweiligen Packstückes an einem bestimmten Punkt des Ablagetisches erfolgt.

Obwohl die bekannten Vorrichtung bereits ein weitgehend automatisches Anordnen der Packstücke auf dem Ablagetisch ermöglicht, ist es weiterhin nötig, die Packstücke beim Auflegen auf die Rollenbahn von Hand auszurichten. Außerdem kann die bekannten Vorrichtung jeweils nur ein Packstück verarbeiten, wodurch die Arbeitsgeschwindig keit der Vorrichtung relativ gering ist.

Der Erfindung liegt daher die Aufgabe zugrunde, eine Vorrichtung der eingangs genannten Art in ihrer Handhabung zu verbessern und dabei die Arbeitsgeschwindigkeit der Vorrichtung zu erhöhen.

Diese Aufgabe wird erfindungsgemäß dadurch gelöst, daß in Förderrichtung vor dem Drehkreuz ein weiterer, als erste Positioniereinheit ausgebildeter Rollenbahnabschnitt angeordnet ist und daß die Vorrichtung eine Steuerung umfaßt, mittels welcher die einzelnen Rollenbahnabschnitte unabhängig voneinander antreibbar und abbremsbar ausgebildet sind.

Durch die Kombination der erfindungsgemäßen Merkmale läßt sich in überraschender Weise eine Erhöhung der Produktionsgeschwindigkeit erreichen. Dabei fällt als Vorteil ab, daß die Packstücke beliebig auf die Rollenbahn geworfen werden können, ohne daß sie in Bezug auf die Mittenachse des Drehkreuzes ausgerichtet werden müssen. Diese Ausrichtung übernimmt die erste Positioniereinheit. Dadurch, daß dem Drehkreuz eine weitere Positioniereinheit vorgeschaltet ist und die Rollenbahnabschnitte einzeln und unabhängig voneinander antreibbar sind, kann nun auch jeder Rollenbahnabschnitt unabhängig voneinander angesteuert werden, so daß gleichzeitig auf jedem Rollenbahnabschnitt sich ein Packstück in Bearbeitung befinden kann. Ohne die eigentliche Fördergeschwindigkeit der Rollenbahn zu erhöhen, läßt sich damit eine Produktionssteigerung von ca. 100% erzielen. Die Steuerung der einzelnen Rollenbahnabschnitte kann dabei so koordiniert werden, daß der Arbeitszustand der benachbarten Rollenbahnabschnitte dabei berücksichtigt wird.

Eine einfache Ausbildung der ersten Positioniereinheit ergibt sich, wenn an dieser zwei gegenüberliegende, quer zur Förderrichtung verschiebbare Zentrierschieber angeordnet sind. Die zweite, also die vor dem Ablagetisch angeordnete Positioniereinheit läßt sich einfach dadurch verwirklichen, daß an dieser zwei gegenüberliegende, quer zur Förderrichtung verschiebbare Positionierschieber angeordnet sind.

Um ein einfaches Aufrollen der Packstücke auf den Ablagetisch zu erreichen, ist es vorteilhaft, wenn der Ablagetisch als Rollenbahnabschnitt ausgebildet ist. Die Rollen des Ablagetisches können dabei ebenfalls angetrieben sein, wobei der Antrieb durch die obengenannte Steuerung mit erfolgen kann.

Zum einfachen Aufbringen der bereits in der Musterlage angeordneten Packstücke auf eine Palette ist es günstig, wenn an dem Ablagetisch ein quer zur Förderrichtung verschiebbarer Abräumschieber angeordnet ist.

Ein besonders einfacher Antrieb sämtlicher Schieber läßt sich dadurch verwirklichen, wenn die Schieber mit an einem Gestell der Rollenbahn angebrachten Druckluftzylindern antriebsverbunden sind. Der Antrieb der Druckluftzylinder erfolgt über die gleiche Steuerung, welche auch den Antrieb der einzelnen Rollenbahnabschnitte steuert.

Gemäß einer bevorzugten Ausführungsform ist die Steuerung derart ausgebildet, daß die einzelnen Rollenbahnabschnitte und/oder Schieber je nach Erfordernis gleichzeitig angetrieben oder abgebremst werden können, so daß während des Ausrichtens und des Ablegens auf jedem Rollenbahnabschnitt zumindest ein Packstück angeordnet sein kann.

Im folgenden wird ein Ausführungsbeispiel der Erfindung anhand einer Zeichnung näher erläutert. Es zeigen:

Fig. 1 eine perspektivische Ansicht einer erfindungsgemäßen Vorrichtung,

Fig. 2 und Fig. 3 Draufsichten auf die erfindungsgemäße Vorrichtung aus Fig. 1.

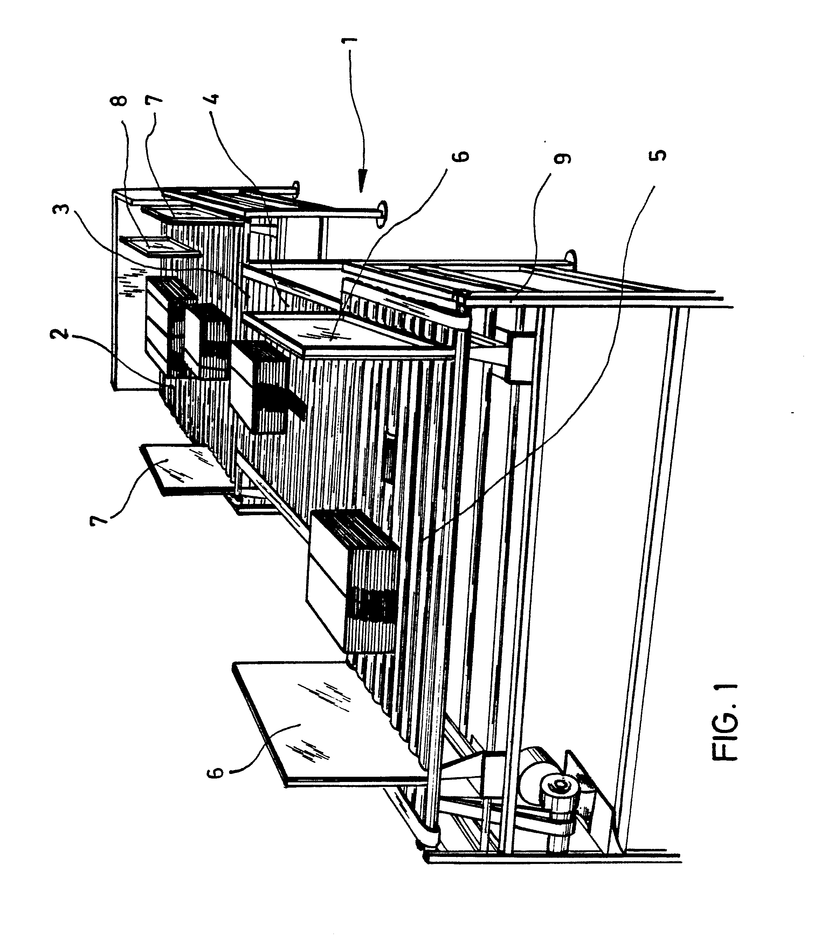

Fig. 1 zeigt in einer perspektivischen Gesamtansicht eine Ausführungsform der erfindungsgemäßen Vorrichtung 1 zum Ausrichten und Anordnen von Packstücken.

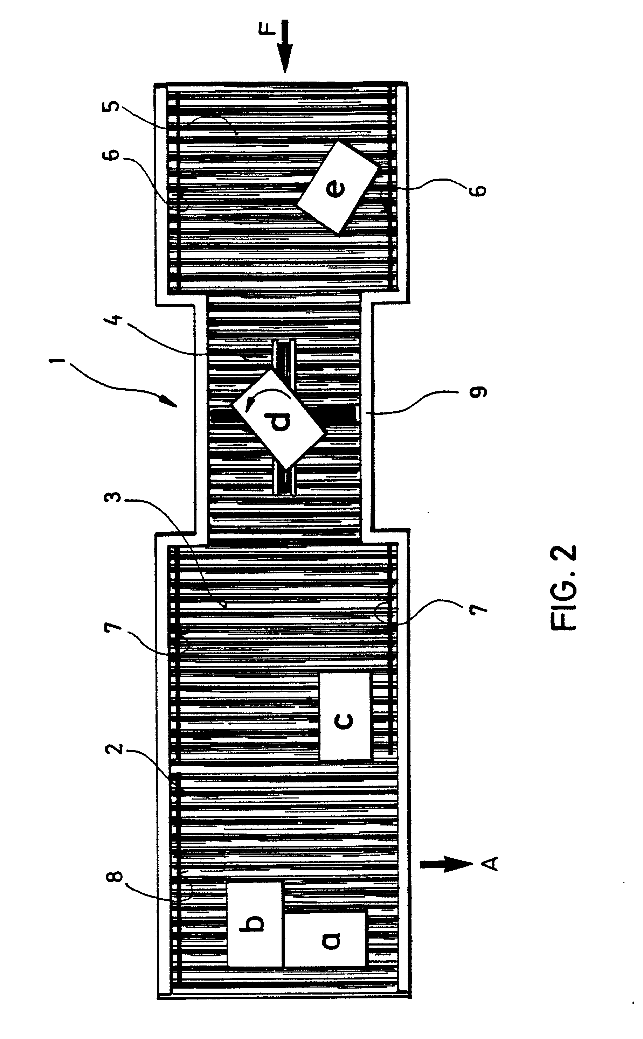

Wie besser aus Fig. 2 ersichtlich ist, umfaßt die Vorrichtung 1 einen Ablagetisch 2 und eine vorgeschaltete Rollenbahn, die in mehrere Rollenbahnabschnitte 3, 4 und 5 unterteilt ist. Ein Rollenbahnabschnitt 4 ist als Drehkreuz ausgebildet, während ein weiterer Rollenbahnabschnitt 3, der sich in Förderrichtung F an das Drehkreuz 4 anschließt, als Positioniereinheit 3 ausgebildet ist.

In Förderrichtung gesehen vor dem Drehkreuz 4 ist ein weiterer Rollenbahnabschnitt 5 vorgesehen, der eine erste Positioniereinheit bildet.

Wie aus der Zeichnung nicht ersichtlich ist, umfaßt die Vorrichtung 1 weiterhin eine Steuerung, mittels welcher die einzelnen Rollenbahnabschnitte 3, 4 und 5 unabhängig voneinander angetrieben und abgebremst werden können.

Die erste Positioniereinheit 5 umfaßt zwei gegenüberliegende, quer zur Förderrichtung F verschiebbare Zentrierschieber 6.

Die zwischen dem Ablagetisch 2 und dem Drehkreuz 4 angeordnete Positioniereinheit 2 umfaßt ebenfalls zwei gegenüberliegende und quer zur Förderrichtung F verschiebbare Positionierschieber 7.

Der Ablagetisch 2 selbst ist ebenfalls als Rollenbahnabschnitt ausgebildet, dessen Rollen über die obenerwähnte Steuerung angetrieben werden können. An dem Ablagetisch 2 ist außerdem ein quer zur Förderrichtung verschiebbarer Abräumschieber 8 angebracht.

Sämtliche Schieber 6, 7 und 8 werden über in den Zeichnungen nicht dargestellten Druckluftzylinder betätigt, welche unterhalb der Rollenbahnabschnitte 2 bis 5 an dem Gestell 9 der Vorrichtung angebracht sind. Zur Verbindung mit den Druckluftzylindern durchgreifen die Schieber mit einzelnen Auslegern Zwischenräume zwischen benachbarten Rollen der Rollenbahnabschnitte.

Auch der Antrieb der Schieber 6 bis 8 erfolgt über die Steuerung, die zudem für die Rollenbahnabschnitte 2 bis 5 zuständig ist.

Seitlich neben dem Ablagetisch 2, also in Abräumrichtung A, kann ein Hubtisch mit einer Palette angeordnet sein, auf welchem die in einer Musterlage angeordneten Packstücke aufgeschoben werden können(nicht dargestellt).

Im folgenden wird die Vorrichtung und insbesondere deren Steuerung anhand einer in Betrieb befindlichen Vorrichtung 1 näher erläutert.

Betrachtet man die Fig. 2, so sind auf dieser mehrere Packstücke, z.B. gebündelte Kartonzuschnitte a, b, c, d und e angeordnet. Diese Kartonzuschnitte können beispielsweise aus einer Bündelumreifungsanlage auf die erste Positioniereinheit 5 geworfen werden.

Zur Zeit befindet sich auf der ersten Positioniereinheit 5 das Packstück e. Durch Zusammenschieben der beiden Zentrierschieber 6 wird das Packstück mittig zur Rollenbahn ausgerichtet. Danach fahren die Zentrierschieber 6 auseinander, worauf die Rollen angetrieben werden und das Packstück auf das Drehkreuz 4 aufläuft.

Das Drehkreuz 4 besteht aus sowohl gleichsinnig als auch gegensinnig antreibbaren Laufrollen. Auf dem Drehkreuz 4 befindet sich z.Z. das Packstück d. Durch gegensinniges Antreiben der Laufrollen des Drehkreuzes 4 wird das Packstück d in die gewünschte Orientierung gebracht. Alsdann werden die Laufrollen des Drehkreuzes 4 gleichsinnig angetrieben, woraufhin das Packstück in die zweite Positioniereinheit 3 gelangt. Auch hier fahren die beiden Positionsschieber 7 zusammen und schließen das Packstück zwischen sich ein. Die Positionsschieber 7 können aber gemeinsam aus der Mittenachse der Rollenbahn ausscheren, um das Packstück, hier das Packstück c, in gewünschter Weise quer zur Förderrichtung F zu verschieben. Das Packstück c befindet sich bereits in der richtigen Querlage. Dann laufen die Rollen des Rollenbahnabschnittes 3 an und fördern das Packstück auf den Ablagetisch 2.

Das Obenausgeführte geschieht sinngemäß mit jedem einzelnen Packstück, wobei sich auf jedem Rollenbahnab schnitt und auch auf dem Ablagetisch 2 Packstücke befinden können, die synchron verarbeitet werden.

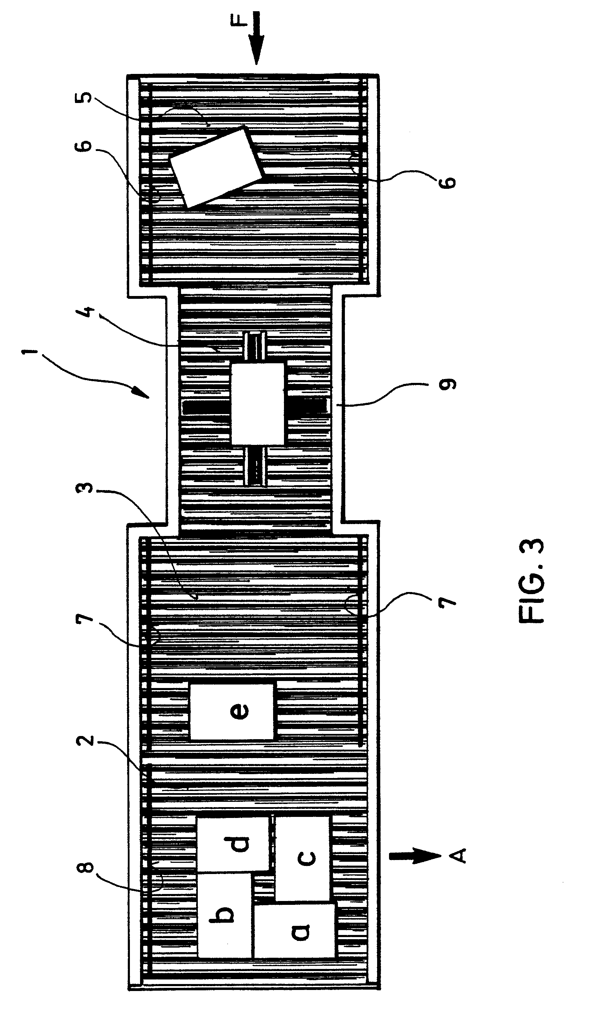

In Fig. 3 ist auf dem Ablagetisch 2 die erste Musterlage vollständig angeordnet. Die aus den Packstücken a, b, c und d bestehende Musterlage wird mittels des Abräumschiebers 8 in Abräumrichtung A auf einen nicht dargestellten Hubwagen aufgeschoben. Die zweite Musterlage, die nun auf dem Ablagetisch 2 angeordnet wird, ist gegenüber der ersten Musterlage spiegelbildlich ausgebildet. Dies ist in der Fig. 3 gut an dem ersten Packstück e der zweiten Musterlage zu erkennen, welches sich bereits in seiner richtigen Querlage befindet.

Nachdem die zweite Musterlage erstellt ist, wird diese auf die erste, auf dem Hubwagen bereits befindliche Musterlage aufgeschoben. Durch die spiegelbildliche Anordnung der zweiten Musterlage ergibt sich eine stabile Anordnung des auf dem Hubwagen ausgebildeten Stapels.

Die Musterlagen können abhängig von den anzuordnenden Packstücken in der Steuerung programmiert werden. Dabei kann die Steuerung derart ausgelegt sein, daß die spiegelbildlichen Anordnungen der Musterlagen selbsttätig berechnet werden.

Es ist auch möglich, die erste Positioniereinheit so auszurichten, daß anstelle der Zentrierschieber 6 der Rollenbahnabschnitt 4 mit dem Drehkreuz quer zur Förderrichtung F verschiebbar angeordnet ist, so daß sich die Mittenachse des Drehkreuzes 4 auf die tatsächliche Lage des aufgeworfenen Packstückes ausrichten kann.

**Ansprüche**

1. Vorrichtung zum Ausrichten und Anordnen von Packstücken, insbesondere Zeitungsbündeln, Säcken und Kartonagen in vorbestimmten Musterlagen, mit einem Ablagetisch und einer angetriebenen, in Abschnitte unterteilten Rollenbahn, wovon ein Rollenbahnabschnitt als Drehkreuz und ein sich in Förderrichtung daran anschließender Abschnitt als Positioniereinheit ausgebildet sind, **dadurch gekennzeichnet,** daß in Förderrichtung (F) vor dem Drehkreuz (4) ein weiterer, als erste Positioniereinheit (5) ausgebildeter Rollenbahnabschnitt angeordnet ist und daß die Vorrichtung (1) eine Steuerung umfaßt, mittels welcher die einzelnen Rollenbahnabschnitte (3, 4, 5) unabhängig voneinander antreibbar und abbremsbar ausgebildet sind.

2. Vorrichtung nach Anspruch 1, **dadurch gekennzeichnet,** daß an der ersten Positioniereinheit zwei gegenüberliegende, quer zur Förderrichtung (F) verschiebare Zentrierschieber (6) angeordnet sind.

3. Vorrichtung nach Anspruch 1 oder 2, **dadurch gekennzeichnet,** daß an der zweiten Positioniereinheit (3) zwei gegenüberliegende, quer zur Förderrichtung (F) verschiebbare Positionierschieber (7) angeordnet sind.

4. Vorrichtung nach mindestens einem der Ansprüche 1 bis 3, **dadurch gekennzeichnet,** daß der Ablagetisch (2) als Rollenbahnabschnitt ausgebildet ist.

5. Vorrichtung nach mindestens einem der Ansprüche 1 bis 4, **dadurch gekennzeichnet,** daß an dem Ablagetisch (2) ein quer zur Förderrichtung (F) verschiebbarer Abräumschieber (8) angeordnet ist.

6. Vorrichtung nach mindestens einem der Ansprüche 2 bis 5, **dadurch gekennzeichnet,** daß die Schieber (6, 7, 8) mit an einem Gestell (9) der Rollenbahn (2 bis 5) angebrachten Druckluftzylindern antriebsverbunden sind.

7. Vorrichtung nach mindestens einem der Ansprüche 1 bis 6, **dadurch gekennzeichnet,** daß die Steuerung derart ausgebildet ist, daß die einzelnen Rollenbahnabschnitt (2, 3, 4, 5) und/oder Schieber (6, 7, 8) je nach Erfordernis gleichzeitig angetrieben oder abgebremst werden können, so daß während des Ausrichtens und Ablegens auf jedem Rollenbahnabschnitt (2, 3, 4, 5) zumindest ein Packstück (a, b, c, d, e) angeordnet sein kann.

FIG. 1

FIG. 2

FIG. 3

0 257 438

## EINSCHLÄGIGE DOKUMENTE

EP 87111638.0

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE - A1 - 2 831 621 (MÖLLERS MASCHINENFABRIK GMBH) <br><br> * Gesamt; insbesondere Anspruch 2; Fig. 1 * <br><br> -- | 1,4,7 | B 65 G 47/24 |
| A | DE - B2 - 2 635 057 (PIEHLER) <br><br> * Gesamt * <br><br> -- | 1,3,5 | |
| A | SOVIET INVENTIONS ILLUSTRATED, Sektion Q, Woche 86/16, 28. Mai 1986 <br><br> DERWENT PUBLICATIONS LTD., London, Q 35 <br><br> * SU 1180-335-A (KIEV FOOD INDTECHN) * <br><br> ---- | 1,2 | |

**RECHERCHIERTE SACHGEBIETE (Int. Cl.4)**

B 65 G 47/00

B 65 G 57/00

Der vorliegende Recherchenbericht wurde für alle Patentansprüche erstellt.

| Recherchenort | Abschlußdatum der Recherche | Prüfer |
|---|---|---|
| WIEN | 28-10-1987 | PISSENBERGER |